# EUROPEAN PATENT APPLICATION

(11) **EP 1 995 653 A1**
(43) Date of publication of application: **26.11.2008**
(21) Application number: 07108622.7
(22) Date of filing: 22.05.2007
(51) Int. Cl.: G05B 19/418

(54) **System for controlling an automation process**

(71) Applicant: ABB RESEARCH LTD., 8050 Zürich (CH)
(72) Inventor: Isaksson, Alf, 723 53, VÄSTERÅS (SE); Strand, Martin, 722 46, VÄSTERÅS (SE)
(74) Representative: Lettström, Richard Wilhelm

(57) **Abstract**

The present invention relates to a system for controlling a process comprising a control unit including a controller, capable of transmitting data to at least one actuator capable of affecting said process, which may be controlled by said controller, at least one sensor capable of measuring parameters of said process and transmitting data to said controller, wherein said control unit is arranged for wireless communication over a wireless network, and wherein said controller and one of said at least one actuator or said at least one sensor are co-located such that communication between them is not transmitted over the wireless network.

## Description

### TECHNICAL AREA

The present invention relates to a system for controlling an automation process communicating over a wireless communication network.

### TECHNICAL BACKGROUND

Most plants of today are provided with control systems for controlling and monitoring of a plurality of functions, processes, production steps and the like via field devices comprising sensors, detectors, PLCs, control units, drive units etc. Thus a communication infrastructure needs to be present in the plant for enabling the data and information communication between the different field devices of the control system. The control systems aid the personnel responsible for the plant to ensure its operation and to optimize the process. In these types of systems often closed loop control is used, whereby the control system sends signals to for example a drive unit to change its motor speed, which motor speed is sensed by a sensor that sends a signal of the actual speed back to the control system.

The communication is enabled with process control systems, such as for example the system 800xA from ABB. Such communication contains a wired bus infrastructure where a large number of field devices can be connected and controlled. The system can utilize a number of bus communication protocols such as Foundation Fieldbus, HART and Profibus.

During a number of years the trend in communication has been to go from wired to wireless communication systems, and there is a similar, but more recent, trend also in process applications. A few wireless field devices and control units have been developed and also the process communication protocols have been developed to handle wireless communication.

Even if wireless communication in many applications simplifies the setup of a process control system in that much less wiring is needed, and it is also less complicated to add field devices without having to fit new wiring in existing systems, wireless communication also places higher demands on the engineering tools & methods used for automation applications. One aspect is that the wireless communication often is inferior to wired communication. There could be a number of interference and attenuation sources that may affect the quality of the wireless signals, resulting in packet loss, variable time delay, radio interference and other stochastic behaviour that will directly influence the quality and stability of the controlled processes.

Regarding controlling of processes the interference of signals could be both so called down-link and up-link signals, where down-link signals are data from a controller to for example an actuator regulating a sub-process and up-link signals could be data from a sensor capable of sensing the effect of the regulated sub-process in a closed-loop control process. It is then easy to understand that delays in data or even loss of data could very negatively affect the control process in that either the controller does not receive any information from the sensor or that the actuator does not receive regulating instructions. The control process is then likely to be very unstable or even fail.

Patent application WO 2006/064362 discloses a wireless communication system for processes where one aim is to reduce the risk of inferior process control due to loss of information in the wireless system. The invention concerns monitoring the wireless communication taking place in a controlled process and feeding back information to the controller, which information may be incorporated in a control action, for example by means of the control algorithm. Information that may be included may be dependent, for example, on: packet loss, delay, delay variance. This means that information may be taken directly for example from one or more communication layers, and trends in the communication parameters can also be included. This information can as well be time-varying.

The principal advantage of the invention is that monitoring of the wireless communication provides additional information that may be used to improve process control, and/or control of one or more automation devices. More information is thus provided to control processes and/ or devices without adding dedicated sensors or measuring means, but only by extracting information from existing sources in a new and inventive way, then processing the information, and applying it in a selected way.

However, the above described method entails even more signalling over the wireless network, which on the one hand competes with other data that might be transmitted over a limited bandwidth, which as such could cause data traffic delays and on the other hand also this additional information is also susceptible to delays and losses due to interference.

### BRIEF DESCRIPTION OF THE INVENTION

The aim of the present invention is to remedy the above mentioned problems with wireless networks in particular in process applications.

This aim is solved according to the present invention with the features of the independent patent claims. Preferable features of the invention form the subject of the dependent patent claims.

According to a main aspect of the present invention, it is characterised by a system for controlling a process comprising a control unit including a controller, capable of transmitting data to at least one actuator capable of affecting said process, which may be controlled by said controller, at least one sensor capable of measuring parameters of said process and transmitting data to said controller, wherein said control unit is arranged for wireless communication over a wireless network, and wherein said controller and one of said at least one actuator or said at least one sensor are co-located such that communication between them is transmitted over other communication means than the wireless network.

According to another aspect of the invention, said controller and said at least one actuator or said at least one sensor are arranged on a common printed circuit board. As an alternative, said controller and said at least one actuator or said at least one sensor are arranged on a common micro controller.

According to a further aspect of the invention, when the said controller is co-located with said at least one actuator, the said at least one sensor is arranged with means for handling measured data capable of transmitting information to said controller only if significant changes in the measured data occur.

In this case, said means for handling measured data comprises software for comparing measured data with preset ranges, limits, rate of change.

Preferably the system further comprises an operator station, capable of receiving and transmitting data from and to said control unit over the wireless network.

There are a number of advantages with the present invention. The recent trend in communication systems for process applications is to utilise wireless systems providing less limitations in relation to wired systems. However, as is well known, the wireless systems are much more prone to be affected by disturbances, interference and bandwidth limitations.

One critical area of data traffic is within the control loop of a control unit for any process. According to the present invention one of the data links between the components of the control unit is arranged outside the wireless communication system because either the actuator or the sensor is co-located with the controller. In this way the data traffic between the co-located components are virtually free from any disturbances or interference and the whole control unit becomes less vulnerable.

Preferably the co-location means that the controller and the other component is arranged on the same printed circuit board or micro-controller, which provides an economical and space-saving solution.

When the controller is co-located with an actuator, it is possible to reduce the data traffic in the control loop by arranging the sensor with means for transmitting data to the controller only when significant changes are measured by the sensor. In this way, in contrast to conventional systems, the amount of data transmitted is greatly reduced, which is an additional advantage in wireless communication networks. In this case, the sensor is provided with some "intelligence" such that the sensor itself is capable of deciding when the changes are significant enough to transmit data to the controller.

Preferably the system is also provided with an operator station enabling an operator to monitor the process and to change process parameters when necessary. The communication between the operator station and the control unit is performed via the wireless network, which is much less critical and usually does not take up too much bandwidth.

These and other aspects of and advantages with the present invention will become apparent from the following detailed description and from the accompanying drawings.

### BRIEF DESCRIPTION OF THE DRAWINGS

In the following detailed description of the invention, reference will be made to the accompanying drawings, of which
Fig. 1 is a schematic diagram of closed-loop feedback,
Fig. 2 is a schematic view of one solution according to the present invention, and
Fig. 3 is a schematic view of another solution according to the present invention.

### DETAILED DESCRIPTION OF THE INVENTION

According to the present invention the main aim is to reduce the amount of data traffic over the wireless communication network. This aim has several reasons. One is that if great amounts of data traffic are continuously sent over the network, this leads to delays of some of the data and the more data that is transmitted over the network, the greater the risk that some of the data is lost, corrupted or delayed due to interference. Packet losses and delays often lead to requests for retransmitting data, which further adds to the amount of data in the network.

With conventional wired fieldbus or the like systems, data from for example a sensor to a controller and/ or operator station is communicated periodically at certain time intervals, regardless if the data is relevant or redundant. The same can apply between a controller and an actuator, and in all a lot of information is transmitted in the system.

Another reason for trying to reduce the amount of data traffic over the wireless communication system is the fact that each wireless link is susceptible to communication errors and delays, where some links are more critical than others.

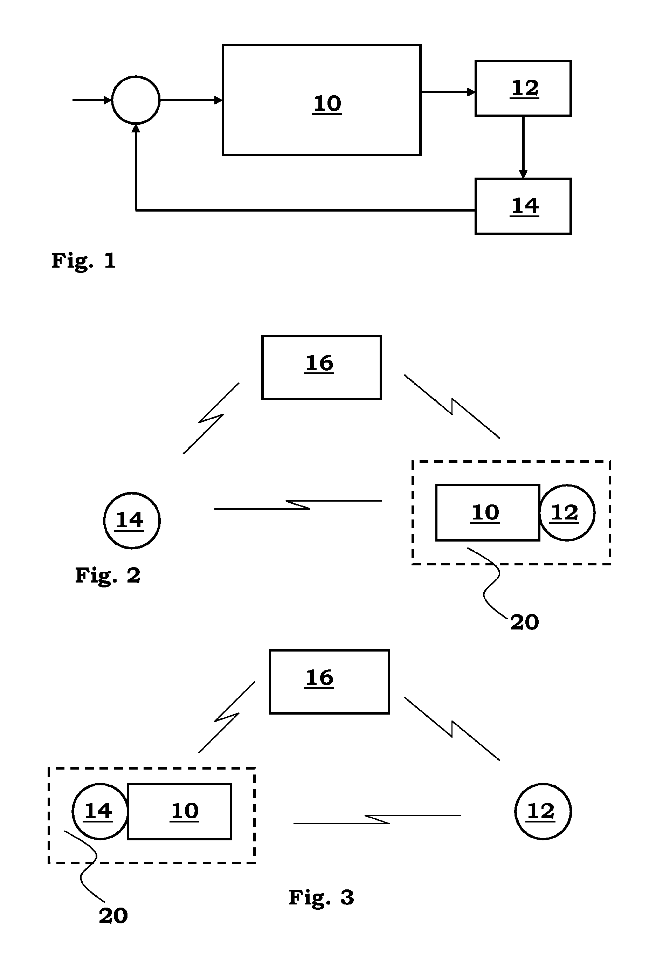

Fig. 1 shows an ordinary closed loop control setup of a process comprising a controller 10 controlling an actuator 12 based on control parameters and algorithms of the controller and based on data from a sensor 14 measuring the impact that the change of the actuator has on a process.

Further, data regarding the control process from the different components of the control setup is transmitted to an operator station 16. Further, data regarding for example setting of values, ranges and the like for controlling the process is transmitted from the operator station to the different components.

It is easy to understand that if wireless communication links were to be used for all communication paths, there is a great risk that some information is lost, delayed or corrupted. And even if not, a lot of redundant or unimportant data is transmitted over the wireless network, causing further delays.

It is also easy to understand that the most critical links of the above system is the control loop. The process could very easily be negatively affected if information from the sensor regarding the state of the process is lost or delayed to the controller, which either has no information to act on or acts with a delay, for controlling the actuator to change the process. The same applies if data is lost or delayed between the controller and the actuator.

According to the present invention one feature of limiting the data traffic over the wireless communication system is to remove at least one of the wireless links in the control loop. According to figure 2, this is obtained by co-locating the controller and actuator to minimize the communication cost to the actuator. Preferably, and most economically, the controller and the actuator are arranged on the same printed circuit board or in the same micro-controller 20. They could of course also be placed on different circuit boards in one unit or in separate units. At least they are positioned geographically close enough to enable data communication by means of a short-range wireless technology as well as wired connection such as near field communication techniques , which as such are well known in the art and will not be described in detail.

It of course to be understood that the controller and actuator could be arranged in other means than printed circuit boards, such as in one or several chips or other semiconductor substrates, encapsulated assembly and the like.

The advantage with this solution is on the one hand that communication between controller and actuator is virtually not subject to any interference or band width limitations at all and on the other hand the communication from the sensor as part of the control loop is less prone to be subjected to interference because for most processes the sensor and actuator are typically arranged rather close to each other geographically and in this case also the controller. This is in contrast with conventionally configured wired systems where the controller generally is placed at a more central location with much longer distances between the controller and the actuator and sensor respectively. Thus all real-time communication for handling the control applications is on one hand transmitted directly between the controller and actuator and on the other hand a shorter distance between sensor and controller than is the case with conventional systems.

In contrast, the communication with the operator station is not at all as critical regarding loss or delay of data, since the operator station is not a part of the control loop and usually does not require real-time communication. Usually data to the operator station, up-link communication, could be sensor information, like for example the actual temperature of a process measured by the sensor, the actual liquid level of a tank, just to mention a few processes. The information from the actuator could be the current position of the actuator, as for example the opening degree of a valve, of a heating element is on or off. This up-link data could be delayed without any immediate risks of affecting the process as such, it is more that operator information may not be up-dated as often or is not exactly current information.

On the other hand data from the operator, down-link communication, could comprise data for setting up sensor range values, control algorithms for the controller, or the like, which information usually is transmitted very irregularly since change of set-up values or up-dating control algorithms often is done at one instance and then is unchanged during the operation of the process.

According to another aspect of the invention for limiting the communication over a wireless communication network for process applications, data is not necessarily transmitted at certain time intervals. For example, a conventional sensor arrangement with an I/O transmits data from the sensor periodically, which is rather often, such as every 10 - 100 milliseconds. This is done regardless of whether the data from the sensor is more or less unchanged and hence a lot of information is transmitted that is unimportant to the control process.

Instead, according to the present invention, information is only transmitted when there is a change in the data from the sensor that is significant, or at least is important for the controlling of the process. Only then is data transmitted from the sensor to the controller. With this approach the amount of transmitted data is significantly reduced. In this case, the sensor has to be arranged with some sort of "intelligence" because it is at the sensor that "decisions" are taken whether the data should be transmitted or not. The sensor is then preferably arranged with some sort of micro-controller and stored software algorithms, filters, ranges, rate of change and such data and is capable of evaluating data or comparing measured data with stored reference data. Depending on the type of sensor, type of process and other control factors, the software could be more or less sophisticated as well as the decision algorithms. In all however, much less data needs to be transmitted on the link between the sensor and the controller.

As an alternative to co-locating the actuator and controller it is of course feasible to co-locate the controller and the sensor of the control loop, as seen in Fig. 3, where the general aim still is to reduce the wireless communication between components of the control loop.

It is to be understood that the embodiments described above and shown in the drawings are to be regarded only as non-limiting examples of the present invention and that it may be modified in many ways within the scope of the patent claims.

## Claims

1. System for controlling a process comprising a control unit including
- a controller, capable of transmitting data to
- at least one actuator capable of affecting said process, which may be controlled by said controller,
- at least one sensor capable of measuring parameters of said process and transmitting data to said controller, wherein said control unit is arranged for wireless communication over a wireless network, and
wherein said controller and one of said at least one actuator or said at least one sensor are co-located such that communication between them is transmitted over other communication means than the wireless network.

2. System according to claim 1, wherein said controller and said at least one actuator or said at least one sensor are arranged such as to enable near field communication techniques.

3. System according to claim 1 or 2, wherein said controller and said at least one actuator or said at least one sensor are arranged on a common printed circuit board.

4. System according to claim 1 or 2, wherein said controller and said at least one actuator or said at least one sensor are arranged in a common micro controller.

5. System according to claim 1 or 2, wherein said controller and said at least one actuator or said at least one sensor are arranged in one or several chips or other semiconductor substrates or encapsulated assembly.

6. System according to claim 1, when the said controller is co-located with said at least one actuator, the said at least one sensor is arranged with means for handling measured data capable of transmitting information to said controller only if significant changes in the measured data occur.

7. System according to claim 4 or 5, wherein said means for handling measured data comprises software for comparing measured data with preset ranges, limits, rate of change.

8. System according to any of the preceding claims, wherein it further comprises an operator station, capable of receiving and transmitting data from and to said control unit over the wireless network.

9. A controller device for controlling an process, said controller arranged capable of transmitting data to
- at least one actuator capable of affecting said process, which may be controlled by said controller,
- at least one sensor capable of measuring parameters of said process and transmitting data to said controller, wherein said control unit is arranged for wireless communication over a wireless network,
wherein said controller and one of said at least one actuator or said at least one sensor are co-located such that communication between them is transmitted over other communication means than the wireless network.
